# DEMANDE DE BREVET EUROPEEN

(11) **EP 1 848 181 A1**
(43) Date de publication de la demande: **24.10.2007**
(21) Numéro de dépôt: 07290488.1
(22) Date de dépôt: 19.04.2007
(51) Int. Cl.: H04L 29/08, H04L 12/56

(54) **Affichage d'informations sur un ecran d'un terminal telephonique**

(30) Priorité: 19.04.2006 FR 0603457
(71) Demandeur: AASTRA MATRA TELECOM, 78280 Guyancourt (FR)
(72) Inventeur: Chevrier, Emmanuel, 91470 Limours (FR); Mercuriali, Jean-Pierre, 91400 Orsay (FR)
(74) Mandataire: Verdure, Stéphane

(57) **Abrégé**

Pour gérer l'affichage sur un écran d'un terminal (102) dans un réseau (100) de transmission de données en mode paquets comprenant au moins un terminal (102) ayant au moins un écran, un premier serveur (101) et un second serveur (103). Le terminal est adapté pour coopérer, d'une part, avec le premier serveur dans le cadre d'une première session selon un protocole du réseau, et, d'autre part, avec le second serveur dans le cadre d'une seconde session correspondant à une session d'appel téléphonique selon le protocole du réseau, distincte de ladite première session. On produit au niveau du premier serveur (101) au moins une information d'affichage à afficher sur l'écran du terminal. On envoie, via la première session, l'information d'affichage depuis le premier serveur (101) à destination du terminal (102). On affiche l'information d'affichage sur l'écran du terminal.

## Description

La présente invention se rapporte à l'affichage d'informations sur un écran d'un terminal téléphonique. Elle trouve des applications en particulier dans un réseau de transmission de données en mode paquets, par exemple dans un réseau IP ("Internet Protocol").

Un terminal téléphonique possède classiquement un écran sur lequel peuvent être affichées différentes informations, telles que la date, l'heure, ainsi que des informations se rapportant à la configuration du terminal telles que des informations relatives à une fonctionnalité de renvoi d'appel pour indiquer à un utilisateur que cette fonctionnalité est activée ou non.

La téléphonie basée sur un réseau de transmission de données en mode paquets, comprenant des terminaux ainsi qu'un serveur d'appels, est en général appelée téléphonie IP ou Voix sur IP, ou encore VolP (pour "Voice over IP" en anglais). Dans ce contexte, on gère les sessions d'appel téléphonique sur la base d'un protocole de gestion de session d'appel permettant notamment de transporter les informations codant la voix. Un tel protocole peut, par exemple, être le protocole SIP ("Session Instruction Protocol").

Généralement, des informations d'affichage sont alors également envoyées depuis le serveur d'appels vers les terminaux dans des messages de ce protocole de gestion de session d'appel. La gestion de l'affichage des écrans des terminaux est alors limitée puisque l'envoi de telles informations ne peut être réalisé qu'en relation avec une session d'appel établie. Dans ce cas les informations d'affichage sont obtenues à partir des messages de signalisation et de leur sémantique.

L'invention vise à remédier à cet inconvénient.

Un objectif de la présente de la présente invention est d'enrichir l'affichage indépendamment d'une session d'appel téléphonique.

A cet effet, un premier aspect de l'invention propose un procédé de gestion de l'affichage sur un écran d'un terminal dans un réseau de transmission de données en mode paquets comprenant au moins un terminal ayant au moins un écran, un premier serveur et un second serveur.

Le terminal est adapté pour coopérer, d'une part, avec le premier serveur dans le cadre d'une première session selon un protocole du réseau, et, d'autre part, avec le second serveur dans le cadre d'une seconde session, ladite seconde session correspondant à une session d'appel téléphonique selon le protocole, distincte de la première session.

Le procédé comprend les étapes consistant à :
/a/ produire au niveau du premier serveur au moins une information d'affichage à afficher sur l'écran du terminal;
/b/ envoyer, via la première session, l'information d'affichage depuis le premier serveur à destination du terminal selon le protocole ;
/c/ afficher l'information d'affichage sur l'écran du terminal.

Grâce à ces dispositions, l'affichage sur un écran d'un terminal est avantageusement réalisé dans une session distincte d'une session d'appel téléphonique. Par conséquent, l'affichage peut être géré de manière indépendante de la session correspondant à un appel téléphonique.

En outre, un tel procédé permet une gestion de l'affichage facile à mettre en place. En effet, il ne requiert pas une implémentation d'un protocole spécifiquement destiné à être utilisé pour la transmission des informations d'affichage depuis le serveur d'affichage vers le terminal.

Le premier serveur peut être un serveur fournissant un service d'affichage et le second serveur peut être un serveur d'appels.

On note que de telles dispositions peuvent aisément être appliquées à tout type de terminal adapté pour gérer une session d'appel sur un réseau de transmission de données en mode paquets via un protocole de ce réseau.

Dans un mode de réalisation de la présente invention, on réalise en outre, avant l'étape /a/ et/ou l'étape /b/, une étape d'abonnement du terminal auprès du premier serveur au cours de laquelle le terminal envoie un message d'abonnement à destination du serveur.

De préférence, lorsque l'étape d'abonnement est réalisée avant l'étape /a/, l'étape /a/ est réalisée sur la base de données contenues dans le message d'abonnement.

Le premier serveur peut avantageusement gérer une association d'un identifiant du terminal avec au moins une information d'affichage. Ainsi, lorsque les données contenues dans le message d'abonnement comprennent l'identifiant du terminal, le premier serveur peut déterminer aisément l'information d'affichage à envoyer au terminal. On peut prévoir que l'information d'affichage est déterminée en fonction du type de terminal, ou plus précisément en fonction de ses capacités.

Dans ce cas, l'information d'affichage peut correspondre à une configuration fonctionnelle téléphonique du terminal, telle que l'activation d'un renvoi d'appel réalisée sur le terminal par exemple.

Dans une variante, le premier serveur peut gérer une association d'une référence d'un abonnement du terminal avec au moins une information d'affichage. Dans ce cas, si les données contenues dans le message d'abonnement indiquent cette référence d'un abonnement, le serveur d'affichage peut déterminer aisément l'information d'affichage à envoyer.

La présente invention couvre tout type d'abonnement par lequel le terminal peut recevoir un ou plusieurs types d'informations d'affichage en échange. Un terminal peut ainsi s'abonner pour recevoir des informations de météo. Une référence de cet abonnement est alors partagée entre le terminal et le serveur d'affichage. Le serveur d'affichage gérant une association entre cette référence d'abonnement et au moins une information d'affichage correspondante, est en mesure d'envoyer l'information d'affichage au terminal sur la base de la référence de cet abonnement. On peut également prévoir, qu'en fonction de l'abonnement, l'envoi de l'information d'affichage au terminal est plus ou moins fréquent. Certains abonnements peuvent proposer d'envoyer très régulièrement des informations d'affichage pour un rafraîchissement d'écran fréquent.

Dans un mode de réalisation préféré de la présente invention, le protocole est le protocole SIP pour "Session Initiation Protocol". Plus précisément, les informations d'affichage sont transportées selon le protocole SIP et une extension protocolaire telle que définie dans la RFC 3265, 'SIP: Specific Event Notification'.

Les premier et second serveurs peuvent être co-localisés dans un même équipement.

Un deuxième aspect de l'invention concerne un serveur adapté pour échanger des données avec un terminal dans le cadre d'une première session dans un réseau de transmission de données en mode paquets selon un protocole du réseau.

Le terminal est adapté pour échanger des données avec un autre serveur dans le cadre d'une seconde session correspondant à une session d'appel téléphonique selon ledit protocole du réseau, la seconde session étant distincte de la première session.

Le serveur comprend :
- une unité de production adaptée pour produire au moins une information d'affichage à afficher sur un écran du terminal ; et
- une unité d'interface adaptée pour envoyer, via la première session, ladite information d'affichage à destination du terminal selon ledit protocole du réseau.

Le serveur peut comprendre en outre une unité d'abonnement adaptée pour recevoir et gérer un message d'abonnement envoyé depuis le terminal.

Dans un mode de réalisation, l'unité de production peut en outre être adaptée pour déterminer une information d'affichage sur la base de données contenues dans le message d'abonnement.

Le serveur peut également être adapté pour gérer la seconde session d'appel téléphonique avec le terminal selon le protocole du réseau.

Le serveur peut comprendre en outre une unité de gestion d'association destinée à gérer une association d'un identifiant du terminal avec au moins une information d'affichage.

Dans un tel cas, l'association d'une information d'affichage avec un identifiant du terminal ou avec d'autres types de données contenues dans le message d'abonnement peut avantageusement être stockée dans une base de données, cette base de données pouvant être localisée sur le serveur.

Le serveur peut également comprendre une unité de gestion d'association destinée à gérer une association d'une référence d'un abonnement du terminal avec au moins une information d'affichage, les données contenues dans le message d'abonnement indiquant alors cette référence d'un abonnement.

Un troisième aspect de l'invention concerne un terminal adapté pour échanger des données avec un premier serveur dans un réseau de transmission de données en mode paquets dans le cadre d'une première session selon un protocole du réseau.

Le terminal est adapté pour échanger des données avec un second serveur dans le cadre d'une seconde session, correspondant à une session d'appel téléphonique selon le protocole du réseau, la seconde session étant distincte de la première session.

Le terminal comprend :
- une unité d'interface adaptée pour recevoir, via la première session, depuis le premier serveur une information d'affichage ;
- une unité d'affichage pour afficher l'information d'affichage sur l'écran.

Le terminal peut comprendre en outre une unité d'abonnement adaptée pour gérer une étape d'abonnement auprès du premier serveur au cours de laquelle le terminal émet un message d'abonnement à destination du premier serveur.

L'unité d'abonnement peut être adaptée pour indiquer des données relatives à l'information d'affichage dans le message d'abonnement.

L'unité d'abonnement peut avantageusement indiquer un identifiant du terminal dans le message d'abonnement.

L'unité d'abonnement peut également indiquer une référence d'un abonnement du terminal au serveur dans le message d'abonnement.

Un quatrième aspect de la présente invention propose un système de gestion d'affichage dans un réseau de transmission de données comprenant un terminal selon le deuxième aspect de la présente invention et un serveur selon le troisième aspect de la présente invention.

D'autres caractéristiques et avantages de l'invention apparaîtront encore à la lecture de la description qui va suivre. Celle-ci est purement illustrative et doit être lue en regard des dessins annexés sur lesquels :
- la figure 1 illustre une architecture d'un réseau de téléphonie par transmission de données selon un mode de réalisation de la présente invention ;
- la figure 2 est un schéma détaillant une architecture d'un serveur d'affichage selon un mode de réalisation de la présente invention ;
- la figure 3 illustre une architecture d'un terminal selon un mode de réalisation de la présente invention ;
- la figure 4 illustre un échange de messages entre un serveur et un terminal suivant un procédé selon un mode de réalisation de la présente invention.

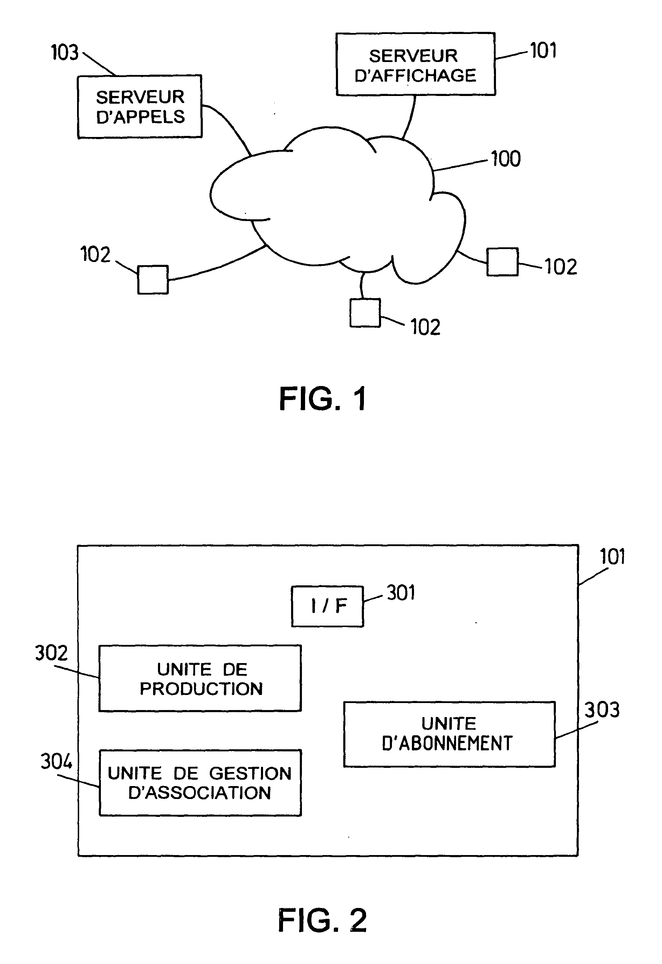

La figure 1 illustre une architecture convenant pour la mise en oeuvre du procédé de la présente invention. Un réseau de transmission de données en mode paquets 100, de type Internet par exemple, comprend un premier serveur 101, un second serveur 103 et des terminaux 102. Les terminaux 102 sont adaptés pour coopérer avec le second serveur 103 pour gérer une session d'appel téléphonique dans le réseau 100 selon un protocole de ce réseau.

Par la suite, le second serveur 103 est appelé un serveur d'appels et le premier serveur 101 est appelé un serveur d'affichage, ces serveurs étant des entités distinctes. Toutefois, la présente invention n'est pas limitée à une telle architecture. Ainsi, par exemple, le serveur d'appels et le serveur d'affichage peuvent avantageusement être réunis en une même entité physique dans le réseau 100. Ainsi, un unique serveur peut coopérer avec un terminal pour la gestion d'une session d'appel téléphonique d'une part, et pour la gestion d'une session pour l'affichage d'autre part, ces deux sessions étant distinctes l'une de l'autre.

Par la suite, la première session, ou session pour l'affichage est référencée par les termes 'session d'affichage'.

Dans l'architecture illustrée à la figure 1, le serveur d'affichage est destiné à fournir aux terminaux 102 des informations à afficher en utilisant ce protocole déterminé.

Les terminaux 102 appartiennent à un même réseau de téléphonie servis par le serveur d'appels 103. Un tel serveur d'appels, reliés aux terminaux 102 via le réseau 100, est de préférence un IP PBX, pour 'Internet Protocol Private Brach exchange'. Ce serveur 103 a en charge la gestion des sessions d'appel téléphonique relatives à l'un de ces terminaux 102.

On peut également considérer une architecture dans laquelle les terminaux 102 sont des terminaux adaptés pour opérer en outre dans un réseau de téléphonie classique ou radio, par exemple un Réseau Téléphonique Commuté (RTC), le GSM respectivement. La présente invention couvre ce type d'architecture également.

Dans un mode de réalisation préféré de la présente invention, avant de réaliser les différentes étapes du procédé selon un mode de réalisation de la présente invention, le terminal 102 s'abonne auprès du serveur d'affichage 102. Au cours de cet abonnement, le terminal peut fournir certaines données sur la base desquelles le serveur peut réaliser la première étape, c'est-à-dire l'étape consistant à fournir une information d'affichage à envoyer au terminal.

Ainsi, par exemple, le serveur peut gérer une association de données relatives au terminal et d'une information d'affichage.

Par exemple, le serveur d'affichage peut générer l'information d'affichage en fonction d'un identifiant du terminal. Ainsi, lorsque le serveur d'affichage correspond également au serveur d'appel, ce serveur peut avantageusement garder en mémoire une association d'un identifiant du terminal avec certaines informations relatives à une configuration fonctionnelle de ce terminal dans le réseau de téléphonie sur le protocole déterminé. Notamment, lorsqu'une fonctionnalité de renvoi d'appel est configurée sur le terminal, le serveur stocke en mémoire une association d'un identifiant de ce terminal et une information à afficher indiquant qu'un renvoi d'appel est activé sur ce terminal. L'information d'affichage peut alors être par exemple 'Renvoi d'appel activé'.

Dans un mode de mise en oeuvre, lorsque le terminal s'abonne auprès du serveur d'affichage, le message d'abonnement correspondant comprend un identifiant de ce terminal. Le serveur est alors en mesure de déterminer l'information à afficher sur le terminal 'Renvoi d'appel activé' sur la base de l'association et en fonction de l'identifiant reçu. Le serveur envoie ensuite cette information au terminal.

Dans une variante, le serveur d'affichage peut gérer les informations d'affichage susceptibles d'être envoyées à un terminal sur la base d'une référence d'un abonnement de ce terminal. On peut alors associer une référence d'un abonnement d'un terminal et une ou plusieurs informations d'affichage.

On peut alors prévoir de proposer des abonnements à différents types de services, auxquels correspondent différents types d'informations à afficher. Ainsi, un utilisateur ayant souscrit à un abonnement correspondant à un service d'accès à des informations relatives à la bourse par exemple, ou encore à la météo, reçoit ce type d'informations via le protocole déterminé et les affiche. Dans le domaine de l'hôtellerie par exemple, il peut être avantageux de mettre à la disposition du client, un terminal affichant des informations relatives à la facturation téléphonique concernant ce client.

Le serveur d'affichage peut alors gérer une association d'une référence d'un abonnement et d'une ou plusieurs informations d'affichage. Ainsi, lorsque le terminal envoie des données correspondant à une référence d'abonnement dans son message d'abonnement auprès du serveur d'affichage, le serveur est alors en mesure de déterminer la ou les informations d'affichage à envoyer en fonction de l'association et des données indiquant une référence d'un abonnement.

D'autres types d'associations entre des données et des informations d'affichage peuvent être mis en oeuvre aisément sur le même principe que les exemples précédemment décrits, de telles données étant gérées par le terminal et une association de ces données et des informations d'affichage étant gérée par le serveur d'affichage.

La réalisation des étapes du procédé, selon un mode de réalisation de la présente invention pour gérer une session d'affichage, est indépendante de toute session d'appel. On peut ainsi commander le déclenchement d'une mise à jour d'un rafraîchissement de l'affichage sur tout type de critères tels que, notamment, une périodicité des envois d'informations d'affichage au terminal. On peut également commander le déclenchement d'une telle gestion, sur des critères relatifs à une mise à jour des informations d'affichage à envoyer à un terminal. Ainsi, par exemple, lorsqu'un terminal est abonné pour recevoir des informations d'affichage relatives à la bourse, on peut prévoir de déclencher la gestion d'affichage en fonction des mises à jour des informations correspondantes sur le serveur d'affichage.

On peut également prévoir un déclenchement en fonction de plusieurs critères combinés.

L'invention couvre tout type de critères de déclenchement.

La figure 2 illustre une architecture d'un serveur d'affichage 101 selon un mode de réalisation de la présente invention.

Un tel serveur comprend une unité de production 301 adaptée pour déterminer au moins une information d'affichage à afficher sur le terminal. Il comprend également une unité d'interface 302 adaptée pour envoyer une information d'affichage déterminée par l'unité de production 301 à destination du terminal selon le protocole déterminé.

De préférence, le serveur 101 comprend en outre une unité d'abonnement 303 adaptée pour recevoir et gérer une réception de message d'abonnement depuis le terminal. Ainsi, le message d'abonnement peut comprendre des données sur la base desquelles le serveur peut déterminer l'information d'affichage à envoyer. Dans ce cas, l'unité d'abonnement peut être en charge d'extraire de telles données et de la transmettre à l'unité de production 302.

Le serveur 101 peut également comprendre une unité de gestion d'association 304 destinée à gérer une association de données gérées par le terminal et d'au moins une information d'affichage gérée par le serveur.

Ainsi, de telles données peuvent correspondre à un identifiant du terminal. De telles données peuvent également correspondre à une référence d'un abonnement auquel le terminal a souscrit auprès du serveur.

On note que les informations d'affichage fournies par le serveur 101 peuvent être stockées dans une mémoire du serveur. Elles peuvent être reçues préalablement par le serveur depuis d'autres entités de réseau pour être stockées sur le serveur. Elles peuvent également être reçues pour être directement transmises au terminal.

L'invention couvre toutes les configurations permettant au serveur d'affichage de fournir des informations d'affichage au terminal.

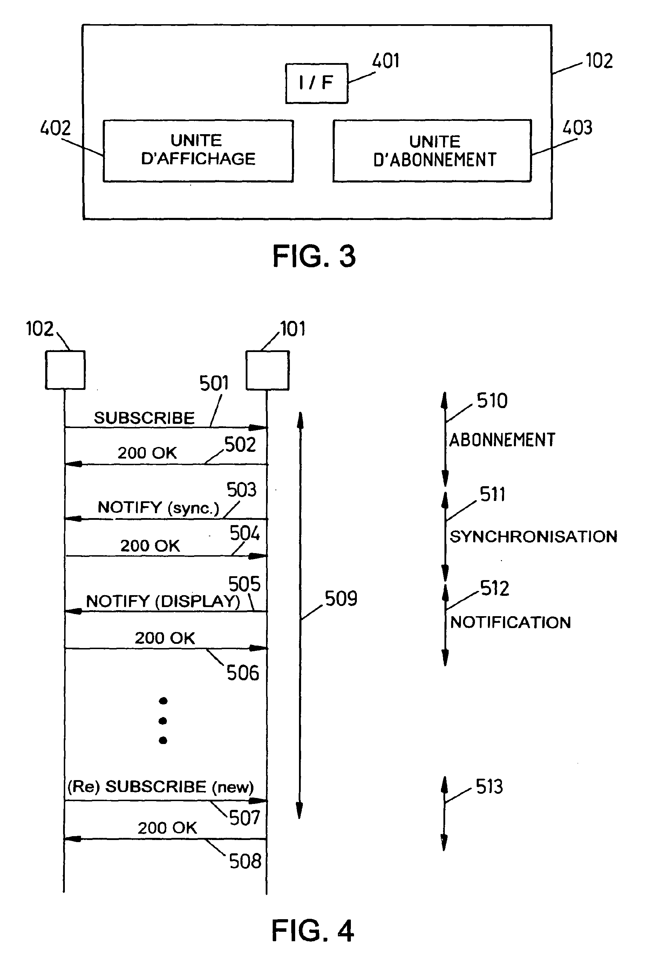

La figure 3 illustre une architecture d'un terminal selon un mode de réalisation de la présente invention. Le terminal 102 comprend une unité d'interface 401 adaptée pour recevoir selon le protocole déterminé une information d'affichage depuis le serveur 101.

Il comprend également une unité d'affichage 402, ou écran, pour afficher l'information d'affichage reçue. De préférence, un tel terminal 102 comprend en outre une unité d'abonnement 403 adaptée pour gérer une étape d'abonnement auprès du serveur au cours de laquelle le terminal émet un message d'abonnement à destination du serveur.

Dans un mode de réalisation de la présente invention, une gestion de session d'appel téléphonique du terminal est réalisée selon le protocole SIP pour 'Session Initiation Protocol', tel que défini dans le document RFC 3265 (pour 'Request For Comment') Session Initiation Protocol - Specific Event Notification, Juin 2002.

On utilise alors avantageusement le même protocole pour mettre en oeuvre le procédé selon un mode de réalisation de l'invention.

On note que par conséquent, il n'est pas nécessaire d'implémenter un autre protocole que celui utilisé pour une session d'appel téléphonique, pour une gestion d'affichage sur le terminal.

La figure 4 illustre un échange de messages entre le terminal et le serveur selon le protocole SIP.

Dans une phase d'abonnement 510, le terminal 102 envoie au préalable un message 501 'SUBSCRIBE' pour s'abonner auprès du serveur d'affichage 101. Ce serveur accuse réception de ce message en émettant un message 502 '200 OK' à destination du terminal 102. Puis, dans une phase de synchronisation 511, le serveur 101 émet à destination du terminal 102 un message de synchronisation sous la forme d'un message 503 'NOTIFY' indiquant au terminal notamment que l'abonnement a bien été pris en compte par le serveur d'affichage. Un message 504 '200 OK' émis par le terminal accuse réception du message 503 auprès du serveur d'affichage 101.

A cette étape, le terminal est abonné auprès du serveur pour un service d'affichage.

Puis, dans une phase 512, le serveur 101 fournit une information à envoyer au terminal 102. Il transmet alors cette information sous la forme d'un message 505 'NOTIFY' comprenant l'information à afficher. Le terminal 102 accuse réception de ce message 505 en émettant un message 506 '200 OK'.

On note qu'une telle information d'affichage peut avantageusement être déterminée par le serveur d'affichage en fonction de données contenues dans le message d'abonnement 501. Ces données peuvent correspondre à un identifiant du terminal. Dans ce cas, le serveur gère une association entre information d'affichage et identifiant de terminal et peut donc fournir l'information à afficher sur la base de cette association.

Ces données peuvent encore correspondre à une référence d'abonnement déterminé. Lorsque le serveur d'affichage gère une association entre une référence d'abonnement et une information d'affichage, il peut alors aisément fournir l'information à afficher au terminal.

Lorsque l'abonnement décrit ci-dessus est fait pour une période de temps déterminé 509, le terminal réitère cette opération d'abonnement de préférence avant l'expiration du dernier abonnement.

La figure 4 illustre une telle étape 513, au cours de laquelle le terminal 102 envoie au serveur 101 un message d'abonnement 507 sous la forme d'un 'SUBSCRIBE'. Le serveur accuse réception de ce dernier par l'émission d'un message 508 '200 OK'.

De préférence, pour envoyer de telles informations d'affichage depuis le serveur au terminal, on utilise le protocole de communication MIME, pour "Multipurpose Internet Mail Extensions", tel que défini notamment dans les RFC 2045 à 2049 (RFC pour "Request For Comment").

Grâce aux dispositions de la présente invention, dans un réseau de téléphonie sur IP, on est en mesure de fournir des informations d'affichage de différentes types et de manière indépendante d'une session d'appel téléphonique, à des terminaux d'un réseau sur la base du protocole utilisé dans le réseau pour la gestion d'une session d'appel. Ainsi, les terminaux peuvent avantageusement rester 'légers' c'est-à-dire qu'ils n'ont pas besoin de gérer de nouveaux protocoles spécifiquement pour l'affichage.

Un mode de réalisation de la présente invention est aisé à mettre en place.

Un service d'affichage offrant des types d'informations très variées peut alors être facilement mis en oeuvre sur la base d'abonnement des terminaux au serveur d'affichage.

## Revendications

1. Procédé de gestion de l'affichage sur un écran d'un terminal dans un réseau de transmission de données en mode paquets (100) comprenant au moins un terminal (102) ayant au moins un écran, un premier serveur (101) et un second serveur
le terminal étant adapté pour coopérer, d'une part, avec le premier serveur dans le cadre d'une première session selon un protocole du réseau, et, d'autre part, avec ledit second serveur dans le cadre d'une seconde session, correspondant à une session d'appel téléphonique avec le terminal selon le protocole, distincte de ladite première session,
le procédé comprenant les étapes consistant à :
/a/ produire au niveau du premier serveur (101) au moins une information d'affichage à afficher sur l'écran du terminal;
/b/ envoyer, via ladite première session, ladite information d'affichage depuis le premier serveur (101) à destination du terminal;
/c/ afficher ladite information d'affichage sur l'écran du terminal ;
ladite information d'affichage correspondant à une configuration fonctionnelle téléphonique.

2. Procédé selon la revendication 1, comprenant en outre, avant l'étape /a/ et/ou l'étape /b/, une étape d'abonnement (510) du terminal (102) auprès du premier serveur (101) au cours de laquelle le terminal envoie un message d'abonnement (501) à destination du premier serveur.

3. Procédé selon la revendication 2, suivant lequel l'étape d'abonnement est réalisée avant l'étape /a/ et suivant lequel l'étape /a/ est réalisée sur la base de données contenues dans le message d'abonnement (501).

4. Procédé selon la revendication 3, suivant lequel le premier serveur (101) gère une association d'un identifiant du terminal avec au moins une information d'affichage ; et
suivant lequel les données contenues dans le message d'abonnement (501) comprennent ledit identifiant.

5. Procédé selon l'une quelconque des revendications précédentes, suivant lequel le protocole du réseau de transmission de données en mode paquets est le protocole SIP ("Session Initiation Protocol").

6. Procédé selon l'une quelconque des revendications précédentes, suivant lequel le premier et le second serveurs sont co-localisés dans un même équipement.

7. Serveur (101) adapté pour échanger des données avec un terminal (102) dans le cadre d'une première session dans un réseau de transmission de données en mode paquets (100), selon un protocole dudit réseau ;
le terminal étant adapté pour échanger des données avec un autre serveur dans le cadre d'une seconde session correspondant à une session d'appel téléphonique selon le protocole du réseau, ladite seconde session étant distincte de ladite première session ;
le serveur (101) comprenant :
- une unité de production (302) adaptée pour produire au moins une information d'affichage à afficher sur un écran de terminal (102); et
- une unité d'interface (301) adaptée pour envoyer, via la première session, ladite information d'affichage à destination du terminal selon le protocole du réseau ;
ladite information d'affichage correspondant à une configuration fonctionnelle téléphonique.

8. Serveur selon la revendication 7, comprenant en outre une unité d'abonnement (303) adaptée pour recevoir et gérer un message d'abonnement (501) envoyé depuis le terminal (102).

9. Serveur selon la revendication 8, dans lequel l'unité de production (302) est adaptée pour déterminer une information d'affichage sur la base de données contenues dans le message d'abonnement (501).

10. Serveur selon l'une quelconque des revendications 7 à 9, adapté pour gérer la seconde session d'appel téléphonique avec le terminal selon le protocole du réseau.

11. Terminal (102) adapté pour échanger des données avec un premier serveur (101) dans un réseau de transmission de données en mode paquets (100) dans le cadre d'une première session selon un protocole dudit réseau ;
le terminal étant adapté pour échanger des données avec un second serveur (103) dans le cadre d'une seconde session correspondant à une session d'appel téléphonique selon le protocole du réseau, ladite seconde session étant distincte de la première session ;
le terminal comprenant :
- une unité d'interface (401) adaptée pour recevoir, via la première session, depuis le premier serveur (101) une information d'affichage à afficher sur l'écran ;
- une unité d'affichage (402) pour afficher ladite information d'affichage sur l'écran,
ladite information d'affichage correspondant à une configuration fonctionnelle téléphonique.

12. Terminal selon la revendication 11, comprenant en outre, une unité d'abonnement (403) adaptée pour gérer une étape d'abonnement (510) auprès du premier serveur (101) au cours de laquelle le terminal émet un message d'abonnement (501) à destination du premier serveur.

13. Terminal selon la revendication 12, dans lequel l'unité d'abonnement (403) est adaptée pour indiquer des données relatives à l'information d'affichage dans le message d'abonnement.

14. Système de gestion d'affichage dans un réseau de transmission de données (100) comprenant un terminal (102) selon l'une quelconque des revendications 11 à 13 et un serveur (101) selon l'une quelconque des revendications 7 à 10.
